Europäisches Patentamt

European Patent Office

Office européen des brevets

(11) Publication number: **0 586 911 A1**

## EUROPEAN PATENT APPLICATION

(21) Application number: 93112865.6

(22) Date of filing: 11.08.93

(51) Int. Cl.5: **C09K 17/00**, C05G 3/00

(30) Priority: **11.09.92 US 943643**

(43) Date of publication of application:
**16.03.94 Bulletin 94/11**

(84) Designated Contracting States:
**AT BE CH DE DK ES FR GB GR IE IT LI LU MC NL PT SE**

(71) Applicant: **AMERICAN CYANAMID COMPANY**
**One Cyanamid Plaza**
**Wayne, NJ 07470-8426(US)**

(72) Inventor: **Miller, Edward Elliott**
**6417 Ranier Road**
**Plano, Texas 75023(US)**

(74) Representative: **Wächtershäuser, Günter, Dr.**
**Tal 29**
**D-80331 München (DE)**

(54) **Polyacrylamide soil modifiers enhanced with nutrients.**

(57) A process of profile modifying and revegetating permeable soils with an environmentally safe nutrient enhancing composition of a non-toxic water-soluble polymer, a redox couple of a water-soluble ferrous salt and a non-toxic, oxidizing agent and an effective amount of an agricultural nutrient which are mixed in water and applied to a subterranean or soil surface formation wherein ferrous ion is oxidized to ferric ion to gel the polymer making the subterranean or soil surface formation impermeable.

## BACKGROUND OF THE INVENTION

The present invention relates to a method of using nutrient enhanced chemical grout wherein water-soluble polymers are crosslinked with iron to form a gel for use in any location where water loss from soil is a problem, such as surface soil stabilization in areas where the top soil has been damaged and revegetation is required. Additionally, the present invention relates to a chemical grout that will not expose workers or the environment to toxic chemicals such as acrylamide, chromium, or aluminum. Further, the present invention relates to a method of accelerating revegetation of the treated areas.

The idea of using mixtures of acrylamide and N,N-methylenebisacrylamide in aqueous solutions for the stabilization of soil was developed in the early 1950's. Reference is made to United States Patent Nos. 2,801,983; 2,801,984; 2,801,985; 2,868,753; 2,940,729; 3,056,757; 3,136,360; and 3,223,163. The technology consists of mixing acrylamide and methylenebisacrylamide in water by pumping them with a catalyst in separate lines to the point of application where they are mixed. A polymerization reaction then takes place thereby forming a crosslinked polymer gel in water. The reaction time is controlled by catalyst concentration and retarder. A major disadvantage with this type of grout is that acrylamide monomer is toxic and is environmentally detrimental to the underground water supply and to workers.

The toxicity of acrylamide monomer was eliminated by crosslinking the water-soluble acrylamide polymer with a metal ion, such as chromium, by taking the metal at its highest valence state $Cr^{+6}$ and reducing it to a lower valence state $Cr^{+3}$, which crosslinks the polymer. The gel time is controlled by the polymer concentration, temperature, and the choice of reducing agent. Another method of profile modification consists of injecting a slug of polymer into the formation, followed by a chelated trivalent metal ion such as aluminum citrate, followed by another polymer slug. While this procedure yields a strong grout, it presents the problem of the toxicity of the chromium ion, which is an unacceptable contaminant in ground water and hazardous to workers.

The fact that ferric ion will crosslink water-soluble polymers in well known. It is taught in United States Patent Nos. 4,825,949; 4,039,029; 4,018,286; 3,785,437 and 3,762,474. In these patents, iron is claimed to be used with a chelating agent, in its highest oxidative state and reduced to its lower oxidative state to crosslink the polymer. However, iron will successfully crosslink acrylamide polymer only in its highest oxidative state $Fe^{+3}$, not the lowest $Fe^{+2}$. Furthermore, the crosslinking of water-soluble, acrylamide polymers with iron has always been difficult to control, making it impossible to place the gels where they are needed thereby necessitating the exclusive use of chromium and aluminum for crosslinking these water-soluble polymers.

Miller et al., United States Patent No. 5,065,822 teach adding iron in its reduced form $Fe^{+2}$, such as ferrous chloride, ferrous ammonium sulfate etc. to the polymer solution. The reduced iron is oxidized to ferric $Fe^{+3}$ ion which then crosslinks the polymer to form the gel. The reaction takes place at a pH of from about 2 to 9, but preferably between 3 and 7. The gel time is dependent on the polymer concentration, the iron concentration, the temperature and the oxidizer. The amount of iron needed depends on the polymer used and the concentration of the polymer. Gels can be made using polyacrylamides, copolymers of acrylamide and acrylic acid, polyacrylates, modified cellulose polymers, polysaccharides, and copolymers of acrylic acid and 2-acrylamido-2-methylpropane sulfonic acid and the like.

The fast gel times that can be obtained by ferris ion crosslinking make it very well suited for subterranean and/or surface soil profile modification. However, areas needing revegetation which are treated with the compositions of the prior art have been found not to revegetate as quickly as is desired in some applications. It would therefore represent a notable advance in the state of the art if a polymeric grout composition could be provided which is also effective in accelerating revegetation.

Mention is made of Youssef et al., United States Patent No. 4,927,447 which discloses a soil fertilization material wherein nutrient salts are infused into swellable hydrophilic particles. However, Youssef et al. do not disclose a polymeric crosslinkable matrix gel useful as a chemical grout for restoring damaged land and which further comprises an effective amount of a source of an agricultural nutrient to accelerate revegetation.

It is therefore an object of this invention to provide an environmentally safe nutritionally enhanced chemical grout that will not expose field workers to, nor contaminate ground water with, toxic monomers such as acrylamide monomer, or heavy metal ions such chromium; and further aids in accelerating the revegetation of treated areas. The grout is useful in a wide variety of surface soil stabilization applications such as reclaiming land after strip mining, road construction and clearcutting of forests. Furthermore, the grout is chemically stable, able to withstand contact with other chemicals which may be found in these areas, and absorbs and retains water in the soil thereby enhancing revegetation, etc.

2

## SUMMARY OF THE INVENTION

In accordance with the present invention, there is provided, a nutrient enhanced chemical soil modifier composition useful for altering the permeability of at least a portion of a subterranean or surface soil formation by passing the composition into the formation to a preselected location and gelling the composition in the presence of water to modify the fluid flow profile of the portion of the formation, the composition comprising: (a) a water-thickening and cross-linkable amount of a water-dispersible polysaccharide or a water-soluble polymer comprising (i) from about 3 to 100 mole percent of acrylic monomer units or salts thereof and (ii) from about 97 to 0 mole percent of different water-soluble monomer units or salts thereof; (b) an amount of a polyvalent metal capable of cross-linking said polymer to form a stable gel, the polyvalent metal being provided in the form of a redox couple, the redox couple comprising (iii) at least one water-soluble ferrous reducing agent capable of being oxidized to a higher valence state and an oxidizing agent effective to oxidize ferrous ion to ferric ion; and (c) an effective amount of at least one agricultural nutrient. The composition has been found to be environmentally safe as to not expose workers and/or underground water to toxic monomers or toxic heavy metals. The composition is crosslinked by the oxidation of ferrous ions to ferric ions to form a gel that is especially useful for surface soil stabilization applications. The gel matrix further comprises sources of agricultural nutrients to aid in accelerating revegetation of the treated area.

The water-soluble polymers are crosslinked with iron by oxidizing ferrous ion to ferric ion in a polymer solution to form a polymer gel in which the gel time and gel strength are controlled by the polymer concentration, ferrous ion concentration, the choice of oxidizer, and the oxidizer concentration. The polymer may be mixed with the crosslinking redox system on the ground surface and pumped to the desired section of the subterranean or surface soil formation where the gelation is to occur.The ferrous ion may be dissolved in the polymer solution in one tank and the oxidizer dissolved in the polymer solution in another tank and the two solutions may be pumped in separate lines to the subterranean or surface soil formation where they are mixed in the area where the gelation occurs.

The compositions further provide a method for accelerating the rate of revegetation to the treated area by providing a supply of agricultural nutrients to the vegetation. It is further contemplated that the compositions of the present invention may further comprise other agricultural chemicals, such as weed killers and/or insecticides.

Other objectives and advantages provided by the present invention will become apparent from the following detailed description of the invention.

## DETAILED DESCRIPTION OF THE INVENTION

In accordance with the present invention, effective environmentally safe nutrient enhanced grout and surface soil profile modification is provided by a gelable matrix of a water-soluble or water-dispersible polysaccharide or copolymer or polymer made from about 3 to 100 mole percent of acrylic monomer unit or salts thereof and from about 97 to 0 mole percent of different water-soluble monomer or salts thereof; and an effective amount of sources of agricultural nutrients. Examples of polymers useful in the practice of the present invention are polyacrylamide, copolymers of acrylamide and acrylic acid, (or similar polymers obtained by hydrolyzing polyacrylamide), copolymers of acrylamide and alkali metal salts of acrylic acid, polyacrylates, modified cellulose polymers, polysaccharides such as carboxymethyl cellulose, copolymers of acrylic acid or acrylic acid salts with comonomers, e.g., acrylamide-2-methylpropanesulfonic acid or salts thereof and the like. The chelatable carboxyl groups of these polymers enables the crosslinking thereof with the ferric ion to produce stable gels. The gelable compositions of the present invention should be prepared using copolymers, polymers or polysaccharides having a molecular weight, $M_w$, of from about 20,000 to about 20 million, preferably from about 200,000 to about 15 million. Polymer concentration of molecular weight within the range set forth above, will generally be from about 0.5% to about 15.0%, and preferably from about 0.5% to 10%, by weight, of the gelable composition.

The compositions of the present invention further comprise an effective amount of sources of an agricultural nutrient. The agricultural nutrients may conveniently be added to the polymer solution. Preferably, the nutrients comprise potassium, nitrogen and/or potassium or sources thereof. However, it is contemplated that a wide variety of other agricultural nutrients may be added to the polymer solution, including but not limited to trace elements, such as calcium, sulfur, magnesium, iron, manganese, boron, zinc, iodine, molybdenum, copper, chlorine or sources thereof and mixtures of any of the foregoing. The amount of nutrient is dependent on the types of vegetation sought to be promoted and can vary widely as long as it is sufficient to provide a supply of nutrients to aid in the acceleration of revegetation of the treated area. Generally, from about 0.5 to about 60%, by weight, based on the total weight of the composition, of nutrient, or nutrient mixture, may be used. Preferred amounts range from about 1.0 to about 35%, by weight, same basis.

Accordingly, the use of at least one source of agricultural nutrients is an essential component of the present invention. Typically, this source will include a fertilizer such as a urea-formaldehyde fertilizer. Urea-formaldehyde fertilizers are available commercially and their properties, manufacture, and uses are discussed in detail in a publication entitled WHAT IS NITROFORM and made available by Noram Chemical Co., Wilmington, Del., USA, pages 18-32.

There are a wide variety of urea-formaldehyde fertilizers that can be employed in the practice of the present invention; and these can be tailored to meet desired nitrogen release characteristics. One example of a suitable urea-formaldehyde fertilizer is marketed by Noram Chemical under the trade name Nitroform®. Further, it is known that by blending urea-formaldehydes which have different solubility values and activity indexes, there is provided a nitrogen source which will continue to release nitrogen to the vegetation for periods of up to five years. By this time, the vegetation is generally well established, even in poor soils.

An exemplary agricultural nutrient formulation that can be employed with about 3 grams of the water-thickening and crosslinkable polymers and copolymers of the present invention in the practice of the present invention is a homogeneous mixture of the following, all employed in particulate form:

| Constituent | Function | Supplier/Manufacturer | Amount (grams) |
|---|---|---|---|
| Nitroform | Nitrogen Source | Noram Chemical Co. | 8 |
| Sierra Controlled Release Fertilizer 17-6-10 Plus Minor | Inorganic Nitrogen, Potassium, Phosphorus and Trace Elements | Sierra Chemical Co. | 16 |

While urea-formaldehydes are the fertilizers of choice in many cases, other slow and/or controlled release, nitrogen supplying materials may be employed instead without departing from the scope of the present invention. These include: isobutylidene diureas (IBDU); sulfur coated ureas, crotonylideneureas, and resin coated, controlled release fertilizers such as Osmocote® (Sierra Chemical Co.) and Nutricote® (Chisso Asahi Fertilizer Co., Toyko, Japan). Both contain mixtures of nitrogen, phosphorus, and potassium fertilizers in an envelope that expands and becomes porous to release its contents as the temperature of the soil in which the formulation is located increases. Conversely, as the weather cools, the coating shrinks and becomes less porous, inhibiting the release of, and conserving, the active ingredients of the fertilizer. Additional information on fertilizers of the character just described appears in Sierra Chemical Co. Bulletin 0787/MS/15M and in United States Patent No. 3,223,518 issued December 14, 1965 to Hansen for GRANULAR FERTILIZER HAVING A PLURALITY OF COATINGS AND THE PROCESS OF MAKING. Applications in which these alternatives to the preferred urea-formaldehyde fertilizers might be considered are those where the soil to be treated lacks sufficient microbes to decompose the fertilizer and release its nitrogen in plant available form and those where the desired vegetation's nutritional requirements cannot be met by a urea-formaldehyde fertilizer.

A preferred formulation for revegetation of a road construction site might contain for about every 1-3 grams of a polymeric or copolymeric soil modifier of the present invention, from about 8 to about 16 grams of a coated, controlled release fertilizer such as Sierra Chemicals Co.'s Sierra 17-6-10 (which also contains trace elements), and from about 16 to about 24 grams of urea-formaldehyde fertilizer (Nitroform®).

Resin coated, controlled release fertilizers can also be incorporated in formulations for the revegetation applications of the present invention. A preferred formulation of this character might include for about every 1-3 grams of polymeric or copolymeric soil modifier of the present invention, from about 8 to about 16 grams of one of the above coated, controlled release fertilizer such as Sierra Chemical Co.'s Sierra 17-6-10 plus trace elements, and from about 8 to about 16 grams of Nitroform®.

Other nutrients and adjuncts can be combined with the nitrogen supplying fertilizer(s) for different applications of the present invention. These include compounds capable of providing potassium and phosphorus and thereby making a complete fertilizer available as well as sources of micronutrients.

Of the other agricultural nutrients that may be supplied, phosphorus is perhaps the most important in establishing revegetation as this element assists in root development. Preferred sources of phosphorus are trisuperphosphate and potassium phosphate or plastic coated trisuperphosphate.

TABLE I

| FERTILIZERS | |
| --- | --- |
| Ammonia | Orthophosphoric acid |
| Ammonium phosphate | Calcium phosphate |
| Ammonium sulfate | Phosphoric acid |
| Diammonium phosphate | Dicalcium phosphate |
| Ammonium nitrate | Calcium magnesium phosphate |
| Sodium nitrate | Tricalcium phosphate |
| Ammonium metaphosphate | Calcium metaphosphate |
| Calcium nitrate | Potassium metaphosphate |
| Potassium nitrate | Potassium hydrogen phosphate |
| Ammonium chloride | Potassium chloride |
| Phosphate rock | Potassium sulfate |
| Basic slag | Sulfate of potash magnesia |
| Trisodiumphosphate | Potassium carbonate |
| Superphosphate | Urea |

TABLE II

| TRACE ELEMENTS | |
| --- | --- |
| Iron | Copper |
| Manganese | Zinc |
| Boron | Iodine |
| Molybdenum | Calcium |
| Magnesium | Sulfur |

Table II lists the useful trace elements but not necessarily the chemical compound source of nutrient which is added. The above trace elements may, for example, be added as salts or chelates or in their elemental state.

Representative, but not exhaustive, of other optional adjuncts that may be employed to advantage in the practice of the present invention are described in Anderson, United States Patent No. 5,022,182 and are listed below:

## TABLE III - HERBICIDES

| | |
|---|---|
| 2,4-D | 2,4,5-T |
| 4-CPA | 2-(MCPP) |
| 2-(3,4-DP) | 4-(2,4-DB) |
| 4-(2,4,5-TB) | 4-(4-CPB) |
| 2,4,5-TES | 2,4-DEB |
| Dalapon | DCV |
| CDEA | CIPC |
| Barban | Fenuron |
| Monuron | Diuron |
| PCP | DNAP |
| 2,3,6-TBA | NPA |
| PMA | HCA |
| MH | DCB |
| Amitrole-T | EXD |
| Erbon | CEPC |
| EPTC | DIPA |
| CBMM | CBDM |
| BMM | AMS |
| SMDC | Amiben |
| Simazine | Ipazine |
| Propazine | Semetone |
| Aratone | Acrolein |
| Banvel D | Dipropalin |
| Calcium Cyanamid | Diphenylacetonitrile |
| 3,4-dichloropropionanilde | Zytron |
| MCPA | Cacodylic acid |
| 2-(2,4-DP) | 3,4-DA |
| 2-(4-CPP) | Silvex |
| 2-(3,4-DB) | 4-(MCPB) |
| MCPES | Sesone |
| 2,2,3-TPA | TCA |
| IPC | CDAA |
| CDEC | BCPC |
| Monuron TCA | Fenuron TCA |
| DNBP | Neburon |
| 2,3,5,6-TBA | DNO |
| KOCN | Endothall |
| TCB | IPX |
| OCH | Amitrole |
| PBA | MAA |
| EBEP | CPPC |
| CBFM | DMA |
| BDM | CBM |
| DMTT | Dichlone |
| Atrazine | Fenac |
| Chlorazine | Trietazine |
| Diquat | Prometone |
| Trifluralin | 2,4-DEP |
| Bandane | Betazan |
| Dacthal | p-dichlorobenzene |

| | |
|---|---|
| Chlordane | Lorox |

6

TABLE IV

| FUNGICIDES | |
|---|---|
| Captan | Copper oleate |
| Copper<br>Sulfur | 1,1-Bis(p-chlorophenyl) 2,2,2-trichloroethanol |
| Ferbam<br>Karathane<br>Maneb<br>EMMI<br>PHIMM<br>Dyrene | Mylone<br>Phaltan<br>Thiram<br>Phenylmercuric acetate<br>Zineb<br>Ziram |
| Terrachlor<br>Dithane M-45 | 1,2,4-trichloro-3-5-dinitrobenzene |

TABLE V

**GROWTH REGULATORS**

Gibberellin and related compounds
$N^1$-Benzylaminopurine compounds
Maleic hydrazide
Colchicine
2-isopropyl-4-methylamino-5-methylphenyl-1-piperidinecarboxylate methyl chloride and related compounds
2,4-dichlorobenzyltributylphosphonium chloride
(2-chloroethyl)-trimethylammonium chloride and related compounds
2,3-dichloroisobutyric acid
6-furfurylaminopurine (Kinetin) and related compounds
2-pyridinethiol, 1-oxide
2,3,5-trichlorobenzoic acid
2,6-dichlorobenzoic acid
Indole-3-acetic acid
Indole-3-butyric acid
Alpha-naphthaleneacetic acid and related compounds
Adenine
N-m-tolylphthalamic acid (Duraset)
2,3,5-triiodobenzoic acid
Benzothiozole-2-oxyacetic acid
B-hydroxyethyl-hydrazine
Indole-3-alanine
Isochlorotetracycline and related compounds
Succinamic acid

TABLE VI

| INSECTICIDES AND NEMATOCIDES ||
|---|---|
| Allethrin | Kelthane |
| DDT | Ethlon |
| Methoxychlor | TEPP |
| Chlordane | Rotenone |
| Aramite | Endrin |
| Lindane | Heptachlor |
| Calcium Arsenate | BHC |
| Copper sulfate | Toxaphene |
| Pyrethrum | Sevin |
| Malathion | OW-9-acaricide pyrene 1330 |
| Parathion | Ovotran |
| Chlorobenzilane | Tedion |
| Dieldrin | Aldrin |

TABLE VII

| ANIMAL REPELLENTS ||
|---|---|
| Allyl isothiocyanate | Tobacco |
| Paradichlorobenzene | Orthodichlorobenzene |
| Cresylic acids | Piperonylbutoxide |
| Bone oil | Thiram |
| Menthylnonylketone | Naphthalene |
| Nicotene | Paradichlorobenzene |
| Polymerized butene | Essence of Canine, Weasel or other animal |

TABLE VIII

| SOIL STERILANTS ||
|---|---|
| Carbon tetrachloride | Methyl bromide |
| Ethylene dibromide | Mylone |
| Calcium cyanamide | Nemagon |
| Carbon disulfide | Orthodichlorobenzene |
| Paradichlorobenzene | Sodium methyl dithiocarbamate |
| Ethylene dichloride | Chloropicrin |

TABLE IX

| INSECT REPELLENTS ||
|---|---|
| Benzol<br>Diphenylamine | N,N-diethyl meta toluamide<br>Benzyl benzoate |
| Diethyl phthalate<br>Di-n-propyl isocinchomeronate | Butoxypolypropylene glycol |
| Dibutyl phthalate<br>Di-n-butyl succinate | Lindane |

TABLE X

| ADJUVANTS | |
| --- | --- |
| Dyes | Diluents |
| Sticking agents | Conditioning agents |
| Spreaders | Chelates |
| Surfactants | Chelating agents |
| Methyl cellulose | Diatomacious clay |

Several references which identify the commonly used names in Tables I-X are:

(1) Pesticide Chemicals Official Compendium, Association of American Pesticide Control Officials, Inc., 1962 edition;

(2) Frear, D.E.H., Pesticide Index, 1961 edition, College Science Publishers, State College, Pa.;

(3) Pesticide Research Institute, Guide to the Chemicals Used in Crop Protection, April 1961, Research Branch, Canada Department of Agriculture; and

(4) Terminology Committee Weed Society of America, Weeds 8, No. 3, July 1960. Identification of designations used in Table III for Herbicides.

In the present invention, iron is added to the polymer-containing solution in its reduced form as a water-soluble ferrous salt such as a ferrous halide, ferrous sulfate, ferrous ammonium sulfate, mixtures thereof and the like, in amounts sufficient to crosslink between 1 and 300% of the crosslinking sites available on the polymer. In the presence of the oxidizer, the ferrous salt is oxidized to the ferric ion $Fe^{+3}$ which then crosslinks the polymer to form the gel. The gel time is dependent on the polymer concentration, the iron concentration, the temperature and the oxidizer. The amount of iron needed depends on the polymer used and the concentration of the polymer.

A number of oxidizers react very fast with the ferrous ion forming gels of the polymer, some almost as fast as they are mixed. This group includes ammonium persulfate, potassium persulfate, sodium persulfate, hydrogen peroxide, potassium permanganate, sodium bromate, and ferric nitrate. Other oxidizers react more slowly forming gels in seconds to hours after mixing. This group includes sodium nitrate, sodium nitrite, sodium chlorate, and sodium hypochlorite. Mixing small amounts of fast oxidizers with the slow oxidizers results in intermediate gel times.

The fast gel times that can be obtained by ferric ion crosslinking make it very well suited for chemical grout. The polymer solution is pumped in a separate line to the point of application where the polymer solution is mixed with the ferrous compound and the oxidizer and gelation occurs. The gel time is controlled by the choice of oxidizer.

Gels used in surface soil stabilization are conveniently mixed in situ and applied to the desired location where gelation occurs. The gel decreases the flow of water in the section of the formation where it is placed, forcing water to enter other sections of the soil formation, thereby reducing erosion of the treated area.

The use of redox couples provides additional flexibility in handling and positioning of the gelable composition so that rigid gel formation can be effected in the desired location, e.g., the high permeability or damaged zones of the surface soil formation. This is primarily because the time between mixing and the onset of gelation is generally proportional to the redox potential of the redox couple selected. Therefore, by carefully selecting the oxidizing agent and reducing agent comprising the redox couple, the user can regulate the time involved prior to gel formation, such that it can be placed at any pre-determined location by regulation of the fluid flow rate of the carrier or delivery fluids.

The gelable compositions of the present invention may be employed as subterranean or surface soil permeability agents in accordance with a number of contemplated methods. For example, either the ferrous compound or the oxidizing agent can be first added to a solution of the copolymer or polysaccharide and source of agricultural nutrient in water or other aqueous medium and then the other redox component added, or the ferrous containing compound and the oxidizing agent can be added simultaneously to a solution or an aqueous medium containing the copolymer or polysaccharide and source of agricultural nutrient. Where convenient, the preferred method is to first disperse the copolymer and source of agricultural nutrient in the water or other aqueous medium and then add the oxidizing agent to the dispersion with stirring. The ferrous containing compound is then added to the solution or aqueous medium containing the copolymer, the source of agricultural nutrient and the oxidizing agent, with stirring. The newly formed ferric ions effect rapid crosslinking of the copolymers and gelation of the solution or aqueous medium containing same.

The gel matrices of the present invention thereby comprise the source of agricultural nutrients within the matrix. Surprisingly, the sources of nutrients are held in the gel matrix and are not washed away by ground water or rivers. Further, it has unexpectedly been found that the addition of the source of nutrients to the polymer compositions does not interfere with the formation of the gel matrix during polymerization. The gel matrices are therefore effective in accelerating revegetation of the treated area by providing a supply of food and water without harming the environment.

**DESCRIPTION OF THE PREFERRED EMBODIMENTS**

The following examples illustrate the present invention. They are not to be construed to limit the scope of the appended claims in any manner whatsoever.

**EXAMPLES 1-7**

Compositions of the present invention are prepared according to the following formulations.

Example 1

| Polymer | 90 acrylamide/10 acrylic acid | 25 g |
|---|---|---|
| Water | | 15 g |
| Ferrous salt | 10% ferrous ammonium sulfate | 5 g |
| Oxidizer | 10% sodium chlorate | 5 g |
| Nutrient | Nitroform® | 50 g |

Example 2

| Polymer | 90 acrylamide/10 acrylic acid | 25 g |
|---|---|---|
| Water | | 14.5 g |
| Ferrous salt | 10% ferrous ammonium sulfate | 5 g |
| Oxidizer | 10% sodium chloride | 5 g |
| | 1% sodium bromate | 5 g |
| Nutrient | Nitroform® | 20 g |
| | Sierra 17-6-10 plus trace elements | 20 g |

Example 3

| Polymer | 90 acrylamide/10 acrylic acid | 25 g |
|---|---|---|
| Water | | 14.2 g |
| Ferrous salt | 10% ferrous ammonium sulfate | 5 g |
| Oxidizer | 10% sodium chlorate | 5 g |
| | 1% sodium bromate | 5 g |
| Nutrient | Sierra 17-6-10 plus trace elements | 25 g |

Example 4

| Polymer | 90 acrylamide/10 acrylic acid | 25 g |
| Water | | 17.5 g |
| Ferrous salt | 2.5% ferrous chloride | 5 g |
| Oxidizer | 10% sodium nitrate | 2.5 g |
| Nutrient | Nitroform® | 25 g |
| | Superphosphate | 10 g |
| | Rock phosphate | 5 g |
| | Dolomite | 5 g |
| | Micromax (micronutrients) | 5 g |
| | Potassium Nitrate | 2 g |

Example 5

| Polymer | 50 Sodium acrylate/50 2-acrylamido-2-methylpropane sulfate (2,000,000 mw) | 50 g |
| Water | | 35 g |
| Ferrous salt | Ferrous ammonium sulfate | 3 g |
| Oxidizer | Sodium chlorate | 3 g |
| | 1% sodium bromate | 2 g |
| Nutrient | Nitroform® | 25 g |
| | Sierra 17-6-10 plus trace elements | 25 g |

Example 6

| Polymer | Carboxymethyl cellulose | 50 g |
| Water | | 50 g |
| Ferrous salt | Ferrous ammonium sulfate | 5 g |
| Oxidizer | 2% ammonium persulfate | 5 g |
| Nutrient | Nitroform® | 50 g |
| | Sierra 17-6-10 plus trace elements | 50 g |

Example 7

| Polymer | 90 acrylamide/10 acrylic acid | 25 g |
| Water | | 15 g |
| Ferrous salt | 10% ferrous ammonium sulfate | 5 g |
| Oxidizer | 3% hydrogen peroxide | 5 g |
| Nutrient | Nitroform® | 50 g |
| Weed Killer | Simazine® | 0.5 g |
| Insecticide | Pyrethron® | 0.5 g |

## EXAMPLE 8

A one-mile section of newly constructed road is treated using a 90 acrylamide/10 acrylic acid (400,000 mole weight, ferrous ammonium sulfate, ammonium persulfate, Nitroform®, superphosphate, rock phosphate, dolomite, micromax (micronutrients) and potassium nitrate. The polymer concentration is about 7.5%. Ferrous ammonium sulfate and ammonium persulfate are added to crosslink the polymer and gel the system. The ferrous ammonium sulfate is added to the polymer and nutrients in one tank, while the ammonium persulfate is added to the polymer and nutrients in the other. The polymer solutions are pumped from the tanks in separate lines to a holding tank, where the solutions mix while being applied to the surface shoulder area along both sides of the road. The treated area does not erode and revegetates significantly faster than a similar area treated to reduce erosion with the prior art non-nutrient enhanced materials.

The above-mentioned patents are all hereby incorporated by reference.

Although the present invention has been described with reference to certain preferred embodiments, modifications or changes may be made therein by those skilled in the art. For example various polymers of polymer concentrations may be used. Different oxidizing agents or mixed oxidizing agents, or different concentrations of said oxidants or various temperature conditions may be used to control reaction rates and gel settling times. Further, the compositions can further comprise a wide variety of commercial weed killers and insecticides. All such obvious modifications may be made herein, without departing from the scope and spirit of the present invention as defined in the appended claims.

As mentioned above, the process hereof is useful in any application where it is desirable to effect surface soil stabilization such as in reclaiming land after strip mining, road construction and clearcutting of forests.

## Claims

1. A nutrient enhanced chemical soil modifier comprising:
   (a) a water-thickening and cross-linkable amount of a water-dispersible polysaccharide or a polymer comprising:
   (i) from about 3 to 100 mole percent of acrylic monomer units or salts thereof; and
   (ii) from about 97 to 0 mole percent of other water-soluble monomer units or salts thereof;
   (b) an amount of a polyvalent metal capable of crosslinking said polymer to form a stable gel, said polyvalent metal being provided in the form of a redox couple, said redox couple comprising (iii) at least one water-soluble ferrous reducing agent capable of being oxidized to a higher valence state and (iv) an oxidizing agent effective to oxidize ferrous ion to ferric ion whereby said polyvalent metal is in situ produced in the form of ferric ion by oxidation of said reducing agent by said oxidizing agent; and
   (c) an effective amount of at least one agricultural nutrient.

2. A composition as defined in Claim 1 wherein the water-soluble polymer has a molecular weight of from about 20,000 to about 20,000,000.

3. A composition as defined in Claim 1 wherein the polymer (a) is selected from the group consisting of polyacrylamide, copolymers of acrylamide and acrylic acid, copolymers of acrylamide and alkali metal salts of acrylic acid, polyacrylates, modified cellulose polymers, copolymers of acrylic acid or acrylic acid salts with acrylamide-2-methylpropanesulfonic acid or salts thereof and hydrolyzed polyacrylamide.

4. A composition as defined in Claim 1 wherein the ferrous salt is selected from ferrous halides, ferrous sulfate, and ferrous ammonium sulfate, in amounts sufficient to crosslink between 1 to 300% of the crosslinking sites available on the polymer.

5. A composition as defined in Claim 1 wherein the oxidizer is ammonium persulfate, sodium persulfate, potassium persulfate, an ammonium or alkali metal nitrate, an alkali metal nitrite, an alkali metal chlorate, an alkali metal bromate, an alkali metal iodate, an alkali metal hypochlorite, hydrogen peroxide or mixtures of any of the foregoing, in amounts sufficient to fully oxidize the ferrous ion to ferric ion.

EP 0 586 911 A1

6. A composition as defined in Claim 1 wherein said agricultural nutrient (c) is selected from potassium, nitrogen or mixtures thereof.

7. A composition as defined in Claim 1 wherein said agricultural nutrient is a weed killer, an insecticide, or both.

8. In a method for soil stabilization of a subterranean or soil surface formation wherein a fluid gelable composition is passed into the formation and the composition is gelled to modify said portion of the formation, the improvement comprising using as the fluid gelable composition in the presence of water a composition comprising:
(a) a water-thickening and cross-linkable amount of a water-dispersible polysaccharide or a polymer comprising:
(i) from about 3 to 100 mole percent of acrylic monomer units or salts thereof; and
(ii) from about 97 to 0 mole percent of other water-soluble monomer units or salts thereof;
(b) an amount of a polyvalent metal capable of crosslinking said polymer to form a stable gel, said polyvalent metal being provided in the form of a redox couple, said redox couple comprising (iii) at least one water-soluble ferrous reducing agent capable of being oxidized to a higher valence state and (iv) an oxidizing agent effective to oxidize ferrous ion to ferric ion whereby said polyvalent metal is in situ produced in the form of ferric ion by oxidation of said reducing agent by said oxidizing agent; and
(c) an effective amount of at least one agricultural nutrient.

9. A method as defined in Claim 8 wherein the water-soluble polymer has a molecular weight of from about 20,000 to about 20,000,000.

10. A method as defined in Claim 8 wherein the polymer is selected from the group consisting of polyacrylamide, copolymers of acrylamide and acrylic acid, copolymers of acrylamide and alkali metal salts of acrylic acid, polyacrylates, modified cellulose polymers, copolymers of acrylic acid or acrylic acid salts with acrylamide-2-methylpropanesulfonic acid or salts thereof and hydrolyzed polyacrylamide.

11. A method as defined in Claim 8 wherein the ferrous salt is selected from ferrous halides, ferrous sulfate, and ferrous ammonium sulfate, in amounts sufficient to crosslink between 1 to 300% of the crosslinking sites available on the polymer.

12. A method as defined in Claim 8 wherein the oxidizer is ammonium persulfate, sodium persulfate, potassium persulfate, an ammonium or alkali metal nitrate, an alkali alkali metal nitrite, a alkali metal chlorate, an alkali metal bromate, alkali metal iodate, an alkali metal hypochlorite, hydrogen peroxide or mixture thereof in amounts sufficient to fully oxidize the ferrous ion to ferric ion.

13. A method as defined in Claim 8 wherein said agricultural nutrient (c) is selected from potassium, nitrogen or mixtures thereof.

14. A method as defined in Claim 8 wherein said agricultural nutrient is a weed killer, an insecticide, or both.

13

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 415 141 (CHEMIE LINZ)<br>* page 1, line 40 - page 3, line 20 *<br>* page 4, line 25 - line 36 *<br>--- | 1,3-7 | C09K17/00<br>C05G3/00 |
| X | EP-A-0 101 253 (ALLIED COLLOIDS)<br>* page 1, line 1 - line 7 *<br>* page 4, line 10 - line 28 *<br>* page 6, line 26 - page 7, line 10 *<br>--- | 1,3-7 | |
| Y | FR-A-1 567 390 (MITSUBISHI RAYON)<br>* page 2, line 21 - page 3, line 7 *<br>* page 3, line 38 - page 4, line 7 *<br>--- | 1,3-7 | |
| Y | EP-A-0 072 214 (UNILEVER)<br>* page 2, line 22 - page 3, line 5 *<br>--- | 1,3-7 | |
| Y | US-A-3 417 567 (E.HIGASHIMURA)<br>* column 1, line 14 - line 34 *<br>* column 5, line 9 - column 6, line 2 *<br>----- | 1,3-5 | |
| | | | TECHNICAL FIELDS SEARCHED (Int.Cl.5) |
| | | | C09K<br>C05G |

The present search report has been drawn up for all claims

| Place of search | Date of completion of the search | Examiner |
|---|---|---|
| THE HAGUE | 25 November 1993 | Boulon, A |

EPO FORM 1503 03.82 (P04C01)